# EUROPÄISCHE PATENTSCHRIFT

(11) **EP 0 398 864 B1**
(45) Veröffentlichungstag und Bekanntmachung des Hinweises auf die Patenterteilung: **12.07.1995**
(21) Anmeldenummer: 90890149.9
(22) Anmeldetag: 14.05.1990
(51) Int. Cl.: B04C 5/02, B04C 5/13, B01D 45/16, B03B 5/34

(54) **Verfahren und Vorrichtung zum Abtrennen von Stoffen aus einem Medium**
Method and device for the separation of substances from a medium
Procédé et dispositif de séparation de matières d'un milieu

(30) Priorität: 18.05.1989 AT 1201/89; 18.05.1989 AT 1200/89; 23.08.1989 AT 1998/89
(43) Veröffentlichungstag der Anmeldung: 22.11.1990
(73) Patentinhaber: Keuschnigg, Josef, Dipl.-Ing., A-8324 Kirchberg (Steiermark) (AT); Zyklontechnik GmbH, A-3500 Krems (AT)
(72) Erfinder: Keuschnigg, Josef, Dipl.-Ing., A-8324 Kirchberg (Steiermark) (AT)
(74) Vertreter: Beer, Manfred, Dipl.-Ing.

(56) Entgegenhaltungen:
- WO-A-83/01584
- DE-A- 2 647 486
- DE-A- 2 832 097
- DE-A- 2 945 951
- DE-A- 3 615 747
- DE-B- 1 279 538
- DE-B- 1 938 918
- DE-B- 2 038 045
- DE-C- 2 512 104
- DE-U- 1 828 290
- GB-A- 2 137 906
- US-A- 2 378 632
- US-A- 3 953 184
- US-A- 4 420 314

## Beschreibung

Die Erfindung betrifft eine Vorrichtung zum Abtrennen wenigstens eines Stoffes aus einem flüssigen oder gasförmigen Medium durch Zentrifugalkräfte, wobei der Stoff ein vom Medium unterschiedliches spezifisches Gewicht hat, mit einem Gehäuse, mit Einrichtungen zum Erzeugen der Drehbewegung des Gemenges aus Stoff und Medium um die Achse des Gehäuses, mit einer Trennkammer, in welche die Enden von Tauchrohren, die zueinander koaxial sind, hineinragen, wobei das Medium aus der Trennkammer durch die Tauchrohre abgeführt wird, und mit einer Austragöffnung für den abgetrennten Stoff die an dem der Eintrittsöffnung für das Gemenge gegenüberliegenden Ende des Gehäuses vorgesehen ist.

Eine Vorrichtung mit den Merkmalen des Oberbegriffes des unabhängigen Anspruches 1 ist aus der DE-A 25 12 104 bekannt.

Der Erfindung liegt die Aufgabe zugrunde, eine Vorrichtung zur Zentrifugalabscheidung, d.h. insbesondere zur Trennung von Staub oder sonstigen Feststoffen oder von Flüssigkeiten aus Gasen oder Flüssigkeiten, ganz allgemein zur Abtrennung spezifisch schwererer Anteile aus einem flüssigen oder gasförmigen Medium, wobei der Stoff und das Medium im wesentlichen nicht mischbar oder ineinander löslich sind, anzugeben, das mit geringem Energieaufwand und höherem Abscheidegrad durchgeführt werden kann.

Erfindungsgemäß wird dies dadurch erreicht, daß die einander gegenüberliegend angeordneten Enden der Tauchrohre voneinander einen Abstand aufweisen, daß an dem Tauchrohr, das in der Nähe der Austragöffnung angeordnet ist, eine Leiteinrichtung angeordnet ist, daß die Leiteinrichtung mit Abstand von der Mündung des Tauchrohres angeordnet ist, und daß die Leiteinrichtung ringsum vom Tauchrohr absteht.

Die Unteransprüche betreffen vorteilhafte Weiterbildungen der Erfindung.

Weitere Merkmale, Einzelheiten und Vorteile der Erfindung ergeben sich aus den in den Zeichnungen schematisch dargestellten Ausführungsbeispielen.

Es zeigt
Fig. 1 eine tangential angeströmte Trennvorrichtung im Schnitt,
Fig. 2 einen Schnitt durch die Trennvorrichtung von Fig. 1 entlang der Linie II-II,
Fig. 3 eine weitere Ausführungsform einer tangential angeströmten Trennvorrichtung im Schnitt,
Fig. 4 einen Schnitt durch die Trennvorrichtung von Fig. 3 entlang der Linie III-III,
Fig. 5 einen Schnitt durch eine tangential angeströmte Trennvorrichtung entlang der Linie IX-IX in Fig. 6,
Fig. 6 einen Schnitt entlang der Linie X-X durch die Trennvorrichtung von Fig. 5,
Fig. 7 eine weitere Ausführungsform einer Trennvorrichtung,
Fig. 8 einen Schnitt durch die Trennvorrichtung von Fig. 9 entlang der Linie XII-XII,
Fig. 9 einen Schnitt durch die Trennvorrichtung entlang der Linie XIII-XIII in Fig. 8,
Fig. 10 und 11 eine den Fig. 5 und 6 ähnliche Ausführungsform und
Fig. 12 und 13 eine praktische, einfach herstellbare Ausführungsform des Oberteils einer Trennvorrichtung.

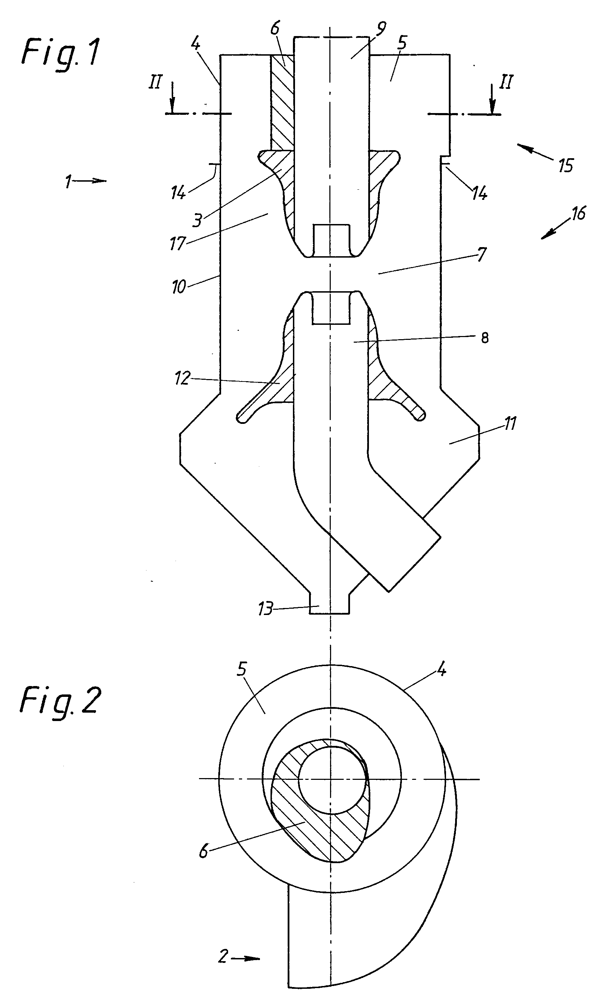

Eine in Fig. 1 und 2 dargestellte Trennvorrichtung 1 wird vom zu trennenden Gemenge aus Stoff und Medium durch ein Rohr 2 tangential angeströmt. Das Gemenge aus Stoff und zu reinigendem Medium wird in einem zwischen einem Leitkörper 6 und einer Außenwand 4 gebildeten spiralförmigen Raum 5 in Drehung versetzt. Das in Drehung versetzte Gemenge gelangt durch einen, zwischen der Außenwand 4 und einer strömungsgünstig geformten Leiteinrichtung 3 gebildeten ringförmigen Raum 17 in eine Trennkammer 7.

In die Trennkammer 7 ragen zwei Tauchrohre 8 und 9, durch die das gereinigte Medium abströmt.

Die Tauchrohre 8 und 9 sind zueinander koaxial angeordnet. Der Durchmesser der Tauchrohre 8 und 9 ist kleiner als der Durchmesser der Leiteinrichtung 3 am Übergang vom spiralförmigen Raum 5 in die Trennkammer 7, wodurch sich der Radius der Drehbewegung des Gemenges aus Stoff und zu reinigendem Medium verringert und seine Drehbewegung beschleunigt wird. Das obere Tauchrohr 9 ist durch den Leitkörper 6, den spiralförmigen Raum 5 und durch die Leiteinrichtung 3 geführt.

In der Trennkammer 7 werden durch die hohe Drehgeschwindigkeit die spezifisch schwereren Stoffe (oder der spezifisch schwerere Stoff) nach außen gegen die Wand 10 der Trennkammer 7 geschleudert und wandern in einen Beruhigungsraum 11. Beim Eintreten des zu reinigenden Mediums in die Tauchrohre 8 und 9 verringert sich der Rotationsradius, wodurch die auftretenden Fliehkräfte noch verstärkt werden.

Am unteren Tauchrohr 8 ist eine Leiteinrichtung 12 angeordnet, die verhindert, daß bereits aus dem Medium abgetrennter Stoff durch Kriechströmungen aus dem Beruhigungsraum 11 wieder in die Trennkammer 7 hochgefördert werden. Im unteren Bereich des Beruhigungsraumes 11 ist eine Austragöffnung 13 zum Abführen der (des) abgetrennten Stoffe(s) vorgesehen.

Um die Beruhigung des zu reinigenden Mediums und der abgetrennten Stoffe im Beruhigungsraum 11 so wirkungsvoll wie möglich zu gestalten, wird der Beruhigungsraum 11 mit möglichst großem Außendurchmesser ausgeführt.

Das untere Tauchrohr 8 ist durch den Beruhigungsraum 11 nach außen geführt.

Die Trennvorrichtung 1 von Fig. 1 besteht aus einem Oberteil 15 und einem Unterteil 16, die miteinander durch eine Flanschverbindung 14 verbunden sind. Dadurch können beliebig gestaltete Oberteile und Unterteile miteinander verbunden werden.

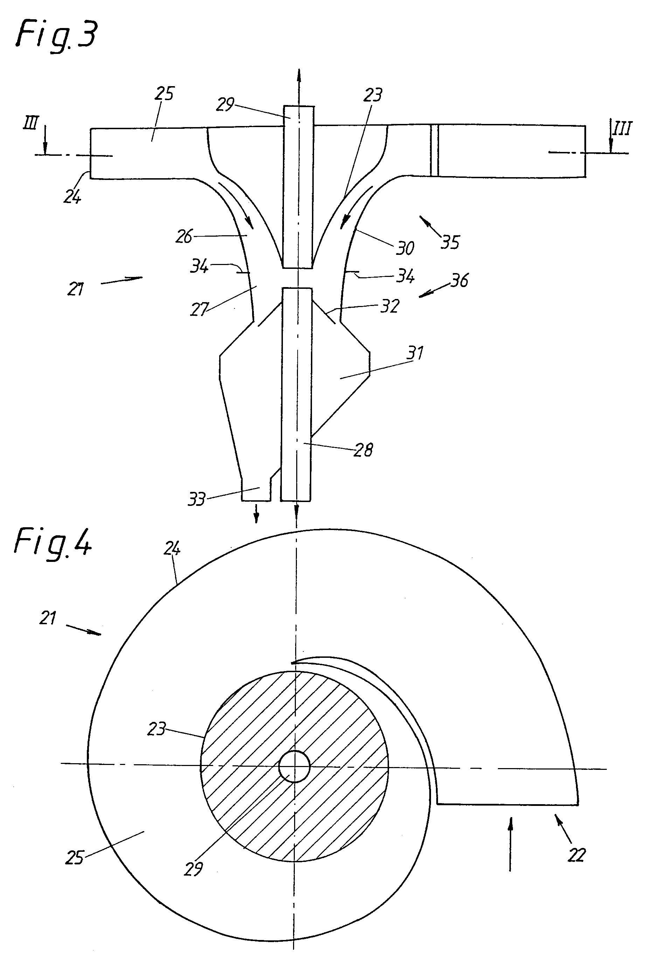

Bei der in den Fig. 3 und 4 dargestellten Ausführungsform einer erfindungsgemäßen Trennvorrichtung 21 wird das Gemenge aus abzutrennendem Stoff und zu reinigendem Medium durch einen etwa spiralförmigen Anströmkanal 22 zugeführt. Das Gemenge strömt dann durch einen zwischen einem inneren Leitkörper 3 und einer äußeren Gehäusewand 30 gebildeten ringförmigen Raum 26 zur Trennkammer 27. Der innere, vom Leitkörper 23 bestimmte Durchmesser und der äußere, von der Gehäusewand 30 begrenzte Durchmesser dieses ringförmigen Raumes 26 nehmen in Strömungsrichtung ab. Der Radius der Drehbewegung des Gemenges aus Stoff und Medium verringert sich daher während der Bewegung vom spiralförmigen Anströmkanal 22 zur Trennkammer 27 ständig, wodurch sich die Winkelgeschwindigkeit der Drehbewegung erhöht.

In die Trennkammer 27 ragen das durch den Leitkörper 23 geführte Tauchrohr 29 und das dem Tauchrohr 29 koaxial gegenüberliegende Tauchrohr 28. Im Bereich der Trennkammer 27 ist am Tauchrohr 28 ein Leitblech 32 angeordnet, das verhindert, daß aus dem Medium abgetrennter Stoff durch Kriechströmungen aus dem Beruhigungsraum 31 wieder hochgefördert wird. Der abgetrennte Stoff wird durch eine Austragöffnung 33 abgeführt.

Ein Oberteil 35 und ein Unterteil 36 der Trennvorrichtung 21 sind durch einen Flansch 34 miteinander verbunden, so daß ein einfaches Auswechseln des Oberteiles 35 oder des Unterteiles 36 möglich ist.

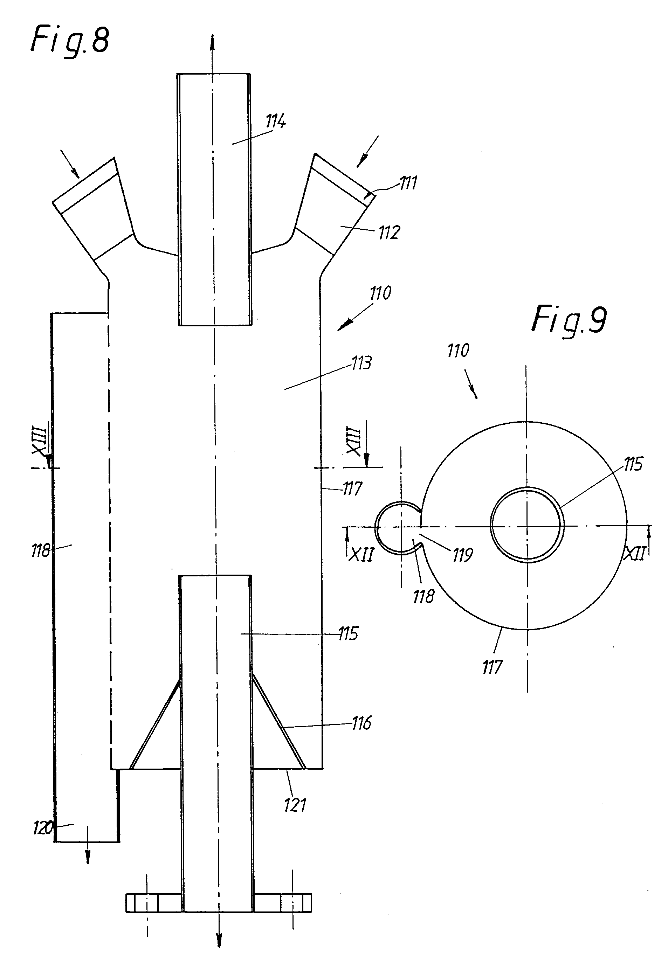

Der Sekundärzyklon, wie er an Hand der Fig. 8 beschrieben ist, kann auch an den in den Fig. 1 bis 4 und 7 dargestellten Trennvorrichtungen 1, 21, 60 und 72 vorgesehen sein, wobei er bei den in den Fig. 1 bis 4 dargestellten Trennvorrichtungen vorzugsweise am Beruhigungsraum 11, 31 angeordnet werden kann.

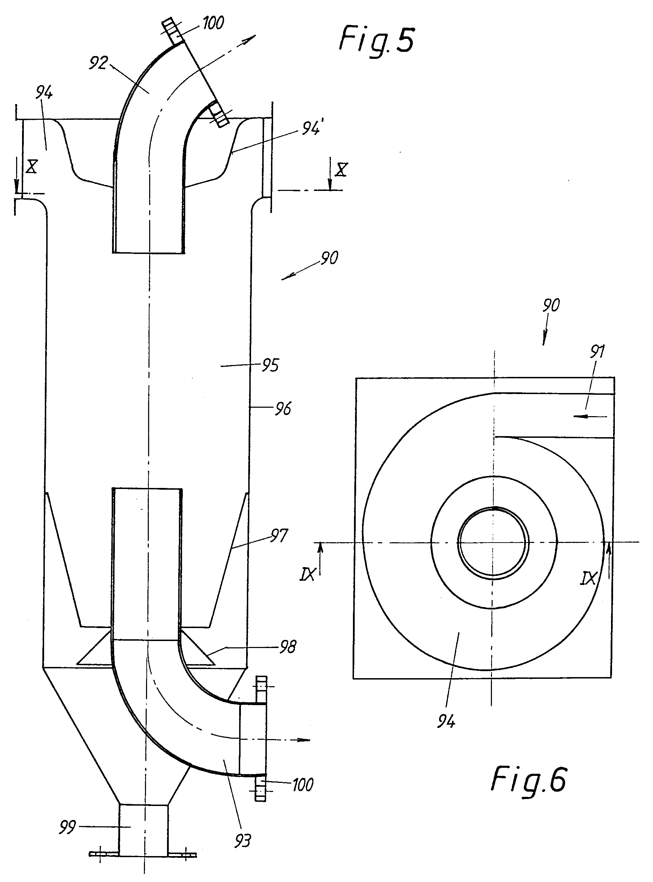

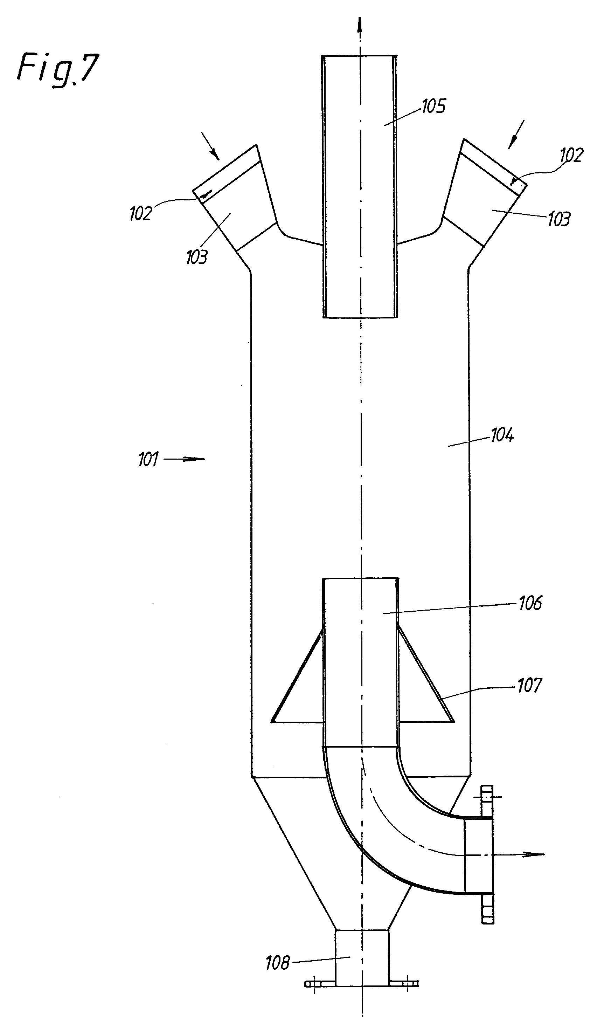

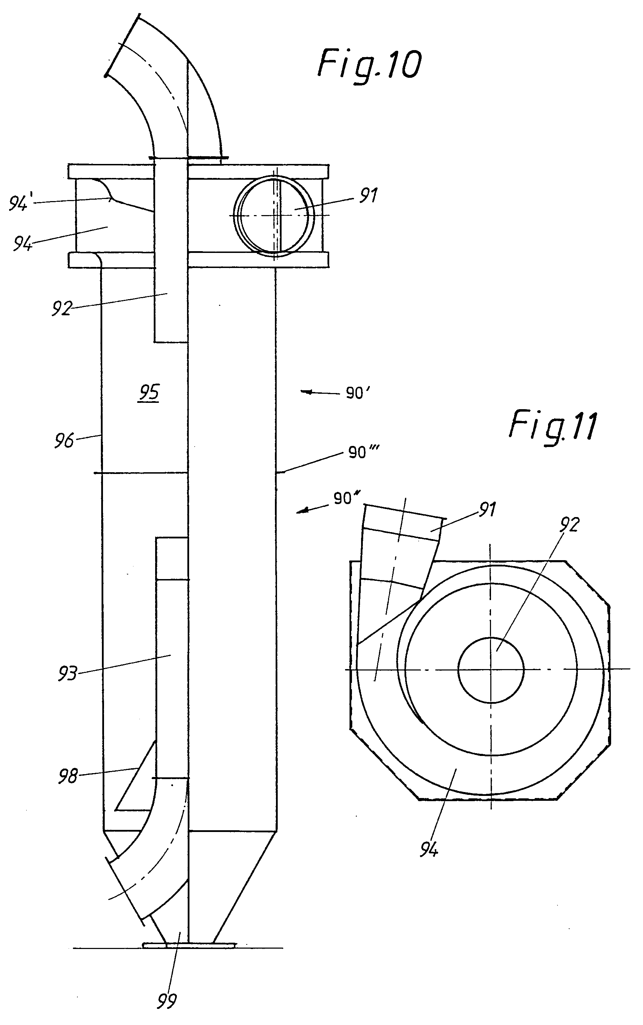

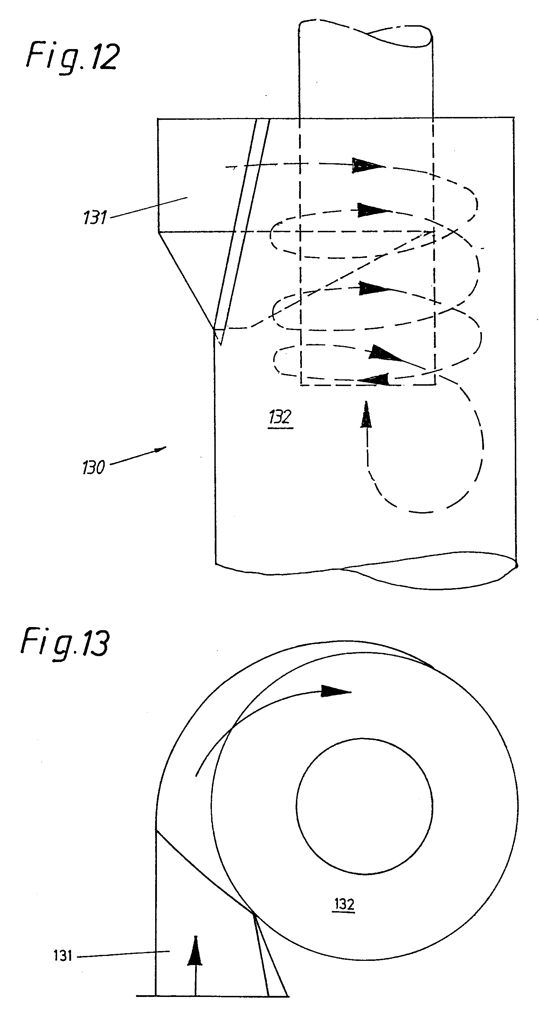

Bei einer in den Fig. 5 und 6 dargestellten Trennvorrichtung 90 wird das Gemenge aus abzutrennendem Stoff und zu reinigendem Medium durch einen etwa spiralförmigen Kanal 91 zugeführt. Der spiralförmige Kanal 91 erstreckt sich um das obere von zwei einander koaxial gegenüberliegenden Tauchrohren 92 und 93. Das zu trennende Gemenge wird in dem vom etwa spiralförmigen Kanal 91 gebildeten Raum 94 in Drehung versetzt und strömt in die Trennkammer 95, von wo das gereinigte Medium durch die Tauchrohre 92 und 93 abgeführt wird. Der abgetrennte Stoff bzw. die abgetrennten Stoffe sinkt (sinken) an der Wand 96 der Trennkammer 95 nach unten bis in einen sich nach unten verjüngenden Trichter 97, an den sich eine mit dem Tauchrohr 93 verbundene, sich kegelförmig nach unten erweiternde Leiteinrichtung 98 anschließt. Es ist auch eine Ausführungsform ohne Trichter 97 möglich, bei der dann die Leiteinrichtung 98 - ähnlich wie in Fig. 7 gezeigt - bis knapp vor die Gehäusewand reicht. Durch diese Einrichtung wird verhindert, daß bereits abgetrennter Stoff wieder nach oben in die Trennkammer 95 gesaugt wird. Der abgetrennte Stoff wird anschließend durch eine Austragöffnung 99 nach unten abgeführt. Eine derartige Ausführungsform Zeigen die Fig. 10 und 11. Fig. 10 zeigt auch, daß die Tauchrohre 92 und 93 unterschiedlich weit in den Abscheideraum 95 ragen. Sowohl bei der in Fig. 5 als auch bei der in Fig. 10 gezeigten Ausführungsform kann der Leitkörper 94' entfallen.

Die Tauchrohre 92 und 93 sind in diesem Ausführungsbeispiel außerhalb der Trennkammer 95 gekrümmt ausgeführt und weisen an ihren äußeren Enden Flansche 100 zur Befestigung an anderen Bauteilen auf.

In Fig. 7 ist eine Ausführungsform einer Trennvorrichtung 101 dargestellt, die ebenfalls zwei in eine Trennkammer 104 ragende, zueinander koaxiale Tauchrohre 105 und 106 aufweist. Das Gemenge wird bei dieser Ausführungsform durch einen kegelringförmigen Kanal 102 oder einen scheibenförmigen Raum, der sich um das Tauchrohr 105 erstreckt, zugeführt. Im Kanal 102 sind Leitbleche 103 angeordnet, durch die das zuströmende Gemenge in Drehung versetzt wird.

Das untere Tauchrohr 106 weist eine Leiteinrichtung 107 auf, die das Hochströmen von bereits abgeschiedenem Stoff verhindert. Das untere Tauchrohr 106 ist unterhalb der Leiteinrichtung 107 gekrümmt und nach außen geführt. Der abgetrennte Stoff wird durch ein Rohr 108 aus der Trennvorrichtung 101 abgeleitet.

Bei der in den Fig. 8 und 9 dargestellten Trennvorrichtung 110 wird ähnlich wie bei der in Fig. 7 dargestellten Trennvorrichtung 101 das zu trennende Gemenge durch einen kegelringförmigen Kanal 111 (oder einen scheibenförmigen Raum) zugeführt, durch Schaufeln 112 in Drehung versetzt und das gereingte Medium aus der Trennkammer 113 durch einander koaxial gegenüberliegende Tauchrohre 114 und 115 abgeführt.

Die Außenwand 117 der Trennkammer 113 weist einen Schlitz 119 auf, über den die Trennkammer 113 mit einem zur Trennkammer 113 parallelen Rohr 118 verbunden ist. Der abgetrennte Stoff bzw. die abgetrennten Stoffe werden durch den Schlitz 119 in das Rohr 118 abgeführt und am unteren Ende 120 des Rohres 118 abgeleitet.

Das Rohr 118 kann als Sekundärzyklon ausgeführt sein, wodurch der Abscheidegrad der Trennvorrichtung 110 noch erhöht werden kann.

Am unteren Ende der Trennkammer 113 ist eine sich nach unten erweiternde, kegelförmige Leiteinrichtung 116 vorgesehen, deren oberes Ende mit dem Tauchrohr 115 und deren unteres Ende mit dem Boden 121 der Trennvorrichtung 110 verbunden ist. Durch diese Leiteinrichtung 116 kann verhindert werden, daß sich im Eckbereich zwischen dem Boden 121 der Trennvorrichtung 110 und dem Tauchrohr 115 abgetrennter Stoff ansammelt.

Bei allen beschriebenen Ausführungsformen kann in der Trennkammer zwischen den Tauchrohren eine Leiteinrichtung angeordnet sein. Durch derartige Einbauten können Druckverluste und Geschwindigkeitsspitzen des Mediums vermieden werden.

Die Fig. 12 und 13 zeigen in Ansicht bzw. in Draufsicht (bei durchsichtig gedachter oberer Abdeckung) eine praktische Ausführungsform des oberen Teils einer erfindungsgemäßen Trennvorrichtung 130. Der spiralförmige Kanal 131, über den das aufzutrennende Gemenge zugeführt wird, wird aus in jeweils nur in einer Richtung gekrümmten Blechzuschnitten gebildet. Trotzdem ergibt sich ein strömungsgünstiger Übergang aus dem Rand 131 in die Trennkammer 132.

## Patentansprüche

1. Vorrichtung zum Abtrennen wenigstens eines Stoffes aus einem flüssigen oder gasförmigen Medium durch Zentrifugalkräfte, wobei der Stoff ein vom Medium unterschiedliches spezifisches Gewicht hat, mit einem Gehäuse (10, 30, 96, 117), mit Einrichtungen (5, 6; 23, 26, 94, 103, 112) zum Erzeugen der Drehbewegung des Gemenges aus Stoff und Medium um die Achse des Gehäuses (10, 30, 96, 117), mit einer Trennkammer (7, 27, 95, 104, 113), in welche die Enden von Tauchrohren (8, 9, 28, 29, 92, 93, 105, 106, 114, 115), die zueinander koaxial sind, hineinragen, wobei das Medium aus der Trennkammer (7, 27, 95, 104, 113) durch die Tauchrohre (8, 9, 28, 29, 92, 93, 105, 106, 114, 115) abgeführt wird, und mit einer Austragöffnung (13, 33, 99, 108, 120) für den abgetrennten Stoff die an dem der Eintrittsöffnung (2, 22, 91, 102, 111) für das Gemenge gegenüberliegenden Ende des Gehäuses (10, 30, 96, 117) vorgesehen ist, dadurch gekennzeichnet, daß die einander gegenüberliegend angeordneten Enden der Tauchrohre (8, 9, 18, 19, 92, 93, 105, 106, 114, 115) voneinander einen Abstand aufweisen, daß an dem Tauchrohr (8, 28, 93, 106, 115), das in der Nähe der Austragöffnung (13, 33, 99, 108, 120) angeordnet ist, eine Leiteinrichtung (12, 32, 98, 107, 116) angeordnet ist, daß die Leiteinrichtung (12, 32, 98, 107, 116) mit Abstand von der Mündung des Tauchrohres (8, 28, 93, 106, 115) angeordnet ist, und daß die Leiteinrichtung (12, 32, 98, 107, 116) ringsum vom Tauchrohr (8, 28, 93, 106, 115) absteht.

2. Vorrichtung nach Anspruch 1, dadurch gekennzeichnet, daß die Leiteinrichtung (12, 32, 98, 107, 116) in der Nähe des freien Endes des Tauchrohres (8, 28, 93, 106, 115) angeordnet ist.

3. Vorrichtung nach Anspruch 2, dadurch gekennzeichnet, daß sich die Leiteinrichtung (12, 32, 98, 107, 116) zur Mündung des Tauchrohres (8, 28, 93, 106, 115) hin verjüngt.

4. Vorrichtung nach einem der Ansprüche 1 bis 3, dadurch gekennzeichnet, daß die Leiteinrichtung (12, 32, 98, 107, 116) die Form eines sich zur Mündung des Tauchrohres (8, 28, 93, 106, 115) hin verjüngenden Mantels eines Kegelstumpfes hat.

5. Vorrichtung nach einem der Ansprüche 1 bis 4, dadurch gekennzeichnet, daß die Leiteinrichtung (32, 98, 107, 116) aus Metallblech besteht.

6. Vorrichtung nach Anspruch 3 oder 4, dadurch gekennzeichnet, daß die Leiteinrichtung (12, 32, 98, 107, 116) über ihr Ende mit geringerem Durchmesser mit dem Tauchrohr (8, 28, 93, 106, 115) flüssigkeits- und gasdicht verbunden ist.

7. Vorrichtung nach einem der Ansprüche 1 bis 6, dadurch gekennzeichnet, daß das Tauchrohr (28, 115), das im Bereich der Austragöffnung (33, 120) vorgesehen ist, gerade ausgebildet ist.

8. Vorrichtung nach einem der Ansprüche 1 bis 6, dadurch gekennzeichnet, daß das Tauchrohr (8, 93, 106), das im Bereich der Austragöffnung (33, 120) vorgesehen ist, einen gekrümmten Abschnitt aufweist, mit dem das Tauchrohr (8, 93, 106) seitlich aus dem Gehäuse (7, 30, 96) herausgeführt ist.

9. Vorrichtung nach Anspruch 8, dadurch gekennzeichnet, daß das Tauchrohr (8, 93, 106), das im Bereich der Austragöffnung (33, 120) vorgesehen ist, durch einen konisch geformten unteren Teil des Gehäuses (10, 96) nach außen geführt ist.

10. Vorrichtung nach einem der Ansprüche 1 bis 9, dadurch gekennzeichnet, daß die Einrichtungen zum Erzeugen der Drehbewegung Leitschaufeln (103, 112) sind.

11. Vorrichtung nach einem der Ansprüche 1 bis 10, dadurch gekennzeichnet, daß das Gehäuse (10, 30, 96) wenigstens zweigeteilt ist und wenigstens einen die Eintrittsöffnung (2, 22, 91, 102, 111) aufweisenden Teil (15, 35, 90') und einen die Austragöffnung (33, 120) aufweisenden Teil (16, 36, 90'') aufweist, die miteinander über einen Flansch (14, 34, 90''') verbunden sind.

12. Vorrichtung nach einem der Ansprüche 1 bis 11, dadurch gekennzeichnet, daß an der Gehäusewand des Gehäuses (117) ein Sekundärzyklon (118) angeordnet ist, der über einen Schlitz (119) mit der Trennkammer (113) verbunden ist.

13. Vorrichtung nach einem der Ansprüche 1 bis 12, dadurch gekennzeichnet, daß zwischen den Tauchrohren (8, 9; 28, 29; 92, 93; 105, 106; 114, 115) ein Leitapparat angeordnet ist.

14. Vorrichtung nach Anspruch 13, dadurch gekennzeichnet, daß der zwischen den Tauchrohren (8, 9; 28, 29; 92, 93; 105, 106; 114, 115) angeordnete Leitapparat Leitbleche aufweist, die in Richtung der Strömung von innen nach außen verlaufen und eine Umkehr der Strömungsrichtung des Mediums beim Übertritt aus der Trennkammer in den innerhalb der Leitbleche liegenden Raum bewirken.

## Claims

1. Apparatus for separating at least one material from a liquid or gaseous medium by centrifugal force, wherein the material has a specific weight different from that of the medium, with a housing (10, 30, 96, 117), devices (5, 6; 23, 26, 94, 103, 112) for creating rotational movement of the mixture of material and medium about the axis of the housing (10, 30, 96, 117), a separating chamber (7, 27, 95, 104, 113) into which project the ends of dip pipes (8, 9, 28, 29, 92, 93, 105, 106, 114, 115) which are coaxial with one another, wherein the medium is taken off from the separating chamber (7, 27, 95, 104, 113) through the dip pipes (8, 9, 28, 29, 92, 93, 105, 106, 114, 115), and a discharge opening (13, 33, 99, 108, 120) for the separated material which is provided at the end of the housing (10, 30, 96, 117) opposite to the inlet opening (2, 22, 91, 102, 111) for the mixture, characterized in that the ends of the dip pipes (8, 9, 28, 29, 92, 93, 105, 106, 114, 115) arranged opposite one another are spaced from one another, in that a guide device (12, 32, 98, 107, 116) is arranged on the dip pipe (8, 28, 93, 106, 115) which is arranged in the vicinity of the discharge opening (13, 33, 99, 108, 120), in that the guide device (12, 32, 98, 107, 116) is arranged spaced from the mouth of the dip pipe (8, 28, 93, 106, 115) and in that the guide device (12, 32, 98, 107, 116) stands out all around the dip pipe (8, 28, 93, 106, 115).

2. Apparatus according to claim 1, characterized in that the guide device (12, 32, 98, 107, 116) is arranged in the vicinity of the free end of the dip pipe (8, 28, 93, 106, 115).

3. Apparatus according to claim 2, characterized in that the guide device (12, 32, 98, 107, 116) tapers to the mouth of the dip pipe (8, 28, 93, 106, 115).

4. Apparatus according to any of claims 1 to 3, characterized in that the guide device (12, 32, 98, 107, 116) has the shape of the surface of a frustum of a cone tapering towards the mouth of the dip pipe (8, 28, 93, 106, 115).

5. Apparatus according to any of claims 1 to 4, characterized in that the guide device (32, 98, 107, 116) consists of sheet metal.

6. Apparatus according to claim 3 or 4, characterized in that the guide device (12, 32, 98, 107, 116) is connected at its end with the smaller diameter liquid and gas tight to the dip pipe (8, 28, 93, 106, 115).

7. Apparatus according to any of claims 1 to 6, characterized in that the dip pipe (28, 115) which is provided in the region of the discharge opening (33, 120) is of straight form.

8. Apparatus according to any of claims 1 to 6, characterized in that the dip pipe (8, 93, 106) which is provided in the region of the discharge opening (33, 120) has a curved section, with which the dip pipe (8, 93, 106) is led out sideways from the housing (7, 30, 96).

9. Apparatus according to claim 8, characterized in that the dip pipe (8, 93, 106) which is provided in the region of the discharge opening (33, 120) is led out through a conically formed lower part of the housing (10, 96).

10. Apparatus according to any of claims 1 to 9, characterized in that the devices for creating the rotational movement are guide blades (103, 112).

11. Apparatus according to any of claims 1 to 10, characterized in that the housing (10, 30, 96) is formed in at least two parts and comprises at least a part (15, 35, 90') with the inlet opening (2, 22, 91, 102, 111) and a part (16, 36, 90'') with the discharge opening (33, 120), which are connected together by a flange (14, 34, 90''').

12. Apparatus according to any of claims 1 to 11, characterized in that a secondary cyclone (118) is arranged on the housing wall of the housing (117) and is connected to the separating chamber (113) through a slot (119).

13. Apparatus according to any of claims 1 to 12, characterized in that a guide apparatus is arranged between the dip pipes (8, 9; 28, 29; 92, 93; 105, 106; 114, 115).

14. Apparatus according to claim 13, characterized in that the guide apparatus arranged between the dip pipes (8, 9; 28, 29; 92, 93; 105, 106; 114, 115) has guide plates which run in the direction of flow from inside to outside and effect reversal of the direction of the flow of the medium on emergence from the separating chamber into the space lying within the guide plates.

## Revendications

1. Dispositif pour la séparation par force centrifuge d'au moins une matière contenue dans un milieu liquide ou gazeux, ladite matière ayant un poids spécifique différent de celui du milieu, comportant une enveloppe (10, 30, 96, 117), des dispositifs (5, 6; 23, 26, 94, 103, 112) pour produire la rotation du mélange de matière et de milieu autour de l'axe de l'enveloppe (10, 30, 96, 117), une chambre de séparation (7, 27, 95, 104, 113) dans laquelle pénètrent les extrémités de tubes plongeurs (8, 9, 28, 29, 92, 93, 105, 106, 114, 115) mutuellement coaxiaux le milieu étant évacué de la chambre de séparation (7, 27, 95, 104, 113) par l'intermédiaire des tubes plongeurs (8, 9, 28, 29, 92, 93, 105, 106, 114, 115) ainsi qu'une ouverture de sortie (13, 33, 99, 108, 120) pour la matière séparée, laquelle ouverture est prévue à l'extrémité de l'enveloppe (10, 30, 96, 117) éloignée de l'ouverture d'entrée (2, 22, 91, 102, 111) pour le mélange, caractérisé en ce que les extrémités disposées en vis-à-vis des tubes plongeurs (8, 9, 28, 29, 92, 93, 105, 106, 114, 115) sont disposées à distance l'une de l'autre, par le fait qu'un dispositif directeur (12, 32, 98, 107, 116) est disposé sur le tube plongeur (8, 28, 93, 106, 115) qui se trouve au voisinage de l'ouverture de sortie (13, 33, 99, 108, 120), en ce que le dispositif directeur (12, 32, 98, 107, 116) est disposé à distance de l'embouchure du tube plongeur (8, 28, 93, 106, 115) et en ce que le dispositif directeur (12, 32, 98, 107, 116) est disposé autour du tube plongeur (8, 28, 93, 106, 115) en étant éloigné de celui-ci.

2. Dispositif selon la revendication 1, caractérisé en ce que le dispositif directeur (12, 32, 98, 107, 116) est disposé dans la région de l'extrémité libre du tube plongeur (8, 28, 93, 106, 115).

3. Dispositif selon la revendication 2, caractérisé en ce que le dispositif directeur (12, 32, 98, 107, 116) se rétrécit en direction de l'embouchure du tube plongeur (8, 28, 93, 106, 115).

4. Dispositif selon l'une des revendications 1 à 3, caractérisé en ce que le dispositif directeur (12, 32, 98, 107, 116) à la forme d'une enveloppe de tronc de cône qui se rétrécit en direction de l'embouchure du tube plongeur (8, 28, 93, 106, 115).

5. Dispositif selon l'une des revendications 1 à 4, caractérisé en ce que le dispositif directeur (32, 98, 107, 116) se compose d'une tôle métallique.

6. Dispositif selon la revendication 3 ou la revendication 4, caractérisé en ce que le dispositif directeur (12, 32, 98, 107, 116) est relié de manière étanche aux liquides et aux gaz au tube plongeur (8, 28, 93, 106, 115) par son extrémité de diamètre plus faible.

7. Dispositif selon l'une des revendications 1 à 6, caractérisé en ce que le tube plongeur (28, 115) prévu dans la région de l'ouverture de sortie (33, 120) est rectiligne.

8. Dispositif selon l'une des revendications 1 à 6, caractérisé en ce que le tube plongeur (8, 93 106) prévu dans la région de l'ouverture de sortie (33, 120) comporte un tronçon courbe par lequel le tube plongeur (8, 93, 106) est amené latéralement à l'extérieur de l'enveloppe (7, 30, 96).

9. Dispositif selon la revendication 8, caractérisé en ce que le tube plongeur (8, 93, 106) prévu dans la région de l'ouverture de sortie (33, 120) est amené à l'extérieur par une partie inférieure de forme conique de l'enveloppe (10, 96).

10. Dispositif selon l'une des revendications 1 à 9, caractérisé en ce que les dispositifs de génération du mouvement de rotation sont des ailettes directrices (103, 112).

11. Dispositif selon l'une des revendications 1 à 10, caractérisé en ce que l'enveloppe (10, 30, 96) est réalisée eu au moins deux parties et comprend au moins une partie (15, 35, 90') comportant l'ouverture d'entrée (2, 22, 91, 102, 111) et une partie (16, 36, 90'') comportant l'ouverture de sortie (33, 120), lesquelles parties sont liées entre elles par une bride (14, 34, 90''').

12. Dispositif selon l'une des revendications 1 à 11, caractérisé en ce qu'un cyclone secondaire est disposé sur la paroi de l'enveloppe (117) et communique avec la chambre de séparation (113) par l'intermédiaire d'une fente (119).

13. Dispositif selon l'une des revendications 1 à 12, caractérisé en ce qu'un dispositif directeur est disposé entre les tubes plongeurs (8, 9 : 28, 29 ; 92, 93 ; 105, 106 ; 114, 115).

14. Dispositif selon la revendication 13, caractérisé en ce que le dispositif directeur disposé entre les tubes plongeurs (8, 9 ; 28, 29 ; 92, 93 ; 105, 106 ; 114, 115) comporte des tôles directrices qui s'étendent dans la direction de l'écoulement, de l'intérieur vers l'extérieur, et provoquent une inversion du sens d'écoulement lorsque le milieu passe de la chambre de séparation dans la chambre située à l'intérieur des tôles déflectrices.
